# EUROPEAN PATENT SPECIFICATION

(11) **EP 1 285 839 B1**
(45) Date of publication and mention of the grant of the patent: **27.09.2006**
(21) Application number: 02017792.9
(22) Date of filing: 12.08.2002
(51) Int. Cl.: B62D 1/04, B29C 45/00, B32B 27/32, B29C 44/12, B60R 21/05, B62D 1/11

(54) **Thermoplastic polyolefin elastomer steering wheel**
Thermoplastisches Polyolefin-Elastomerlenkrad
Volant de direction élastomère polyoléfinique thermoplastique

(30) Priority: 20.08.2001 US 933534
(43) Date of publication of application: 26.02.2003
(73) Proprietor: TRW VEHICLE SAFETY SYSTEMS INC., Lyndhurst Ohio 44124 (US)
(72) Inventor: Grilli, David A., Troy, Michigan 48083 (US); Anaya, Gabriel, Shelby Township, Michigan 48316 (US)
(74) Representative: Wagner, Karl H.

(56) References cited:
- EP-A- 0 997 368
- WO-A-01/53371
- WO-A-97/12930
- DE-A- 4 337 569
- US-A- 5 901 615
- US-A- 6 164 691
- US-B1- 6 216 556

## Description

The present invention relates to a steering wheel having a padding material, and to a method of manufacturing a padding material for a steering wheel.

### Background of the Invention

A typical steering wheel for use in a motor vehicle comprises a metal frame defining the rim of the steering wheel and one or more spokes extending from the rim towards a hub. The metal frame is covered with a padding material. The padding material is typically formed from a thermoplastic or thermosetting material.

U.S. Patent No. 6,164,691 discloses a steering wheel covered with a thermoplastic foam material. The thermoplastic foam material has a continuous external surface molded from a single thermoplastic material. A preferred thermoplastic foam material is formed from Arnitel EM 400, which is commercially available from DSM Engineering Plastics. Arnitel EM 400 is a polyester elastomer that has a Shore D hardness of 38.

WO 97/12930 shows all of the features of the preamble of claim 1 and teaches a padding material for a steering wheel. The padding material is formed by injection molding a mixture of a thermoplastic material or thermoplastic elastomer material based on olefin and a plurality of microspheres. The microspheres comprise plastic shells filled with gas or liquefied gas.

U.S. Patent No. 6,216,556 discloses a method of manufacturing a steering wheel. The method includes providing a steering wheel core with a ring portion and a spoke portion and coating the ring portion and spoke portion with a coating layer. The coating layer is made from a synthetic resin, such as polypropylene, having a hardness (JIS A) of 40 to 90, preferably from a thermoplastic elastomer of olefin having a hardness (JIS A) of 70.

### Summary of the Invention

The present invention relates to a steering wheel comprising a rim portion, a spoke portion, and a foamed padding material adhered to at least one of the rim portion and the spoke portion. The foamed padding material includes a first portion and a second portion. The first portion has a cellular structure and a substantially uniform cell density. The second portion has a continuous external surface free of interruption by a cell. The foamed padding material comprises a gasified chemical foaming agent and a thermoplastic polyolefin elastomer.

Another aspect of the present invention relates to a steering wheel comprising a rim portion, a spoke portion, and a foamed padding material adhered to at least one of the rim portion and the spoke portion. The foamed padding material includes a first portion and a second portion. The first portion has a cellular structure and a substantially uniform cell density. The second portion has a continuous external surface free of interruption by a cell. The foamed padding material comprises a gasified chemical foaming agent and a rubber modified polypropylene. The rubber modified polypropylene preferably comprises polypropylene and a rubber selected from the group consisting of styrene-ethylene-butylene-styrene (SEBS), styrene-butadiene-styrene (SBS), and blends of styrene-ethylene-butylene-styrene (SEBS) and styrene-butadiene-styrene (SBS).

Yet another aspect of the present invention relates to a method of manufacturing a foamed padding material for a steering wheel. In the method, a thermoplastic polyolefin elastomer and a chemical foaming agent are mixed. The thermoplastic polyolefin elastomer is foamed with the chemical foaming agent. A steering wheel armature having a rim portion and a spoke portion is provided. The foamed thermoplastic polyolefin elastomer is adhered to the rim portion and the spoke portion of the steering wheel armature. The foamed thermoplastic polyolefin elastomer adhered to the rim portion and spoke portion of the steering wheel armature forms a foamed padding material including a first portion and a second portion. The first portion has a cellular structure and a substantially uniform cell density. The second portion has a continuous external surface free of interruption by a cell.

A further aspect of the present invention relates to a method of manufacturing a steering wheel. In the method, a thermoplastic polyolefin elastomer and a chemical foaming agent are mixed. The mixture of the thermoplastic polyolefin elastomer and the foaming agent is heated to a temperature above the melting temperature of the thermoplastic polyolefin elastomer. The melted thermoplastic polyolefin elastomer is foamed with the foaming agent. A mold having a first wall portion and a second wall portion is provided. The first wall portion defines a first cavity in which a rim portion of a steering wheel armature is disposed. The second wall portion defines a second cavity in which a spoke portion of the steering wheel armature is disposed. The temperature of the first wall portion is maintained at a first temperature below the melting temperature of thermoplastic polyolefin elastomer. The temperature of the second wall portion is maintained at a second temperature. The second temperature is substantially lower than the first temperature. The foamed thermoplastic polyolefin elastomer is transferred into the first cavity and the second cavity. The foamed thermoplastic polyolefin elastomer is cooled to a temperature below the melting temperature of the thermoplastic polyolefin elastomer. The cooled thermoplastic polyolefin elastomer adheres to the rim portion and spoke portion of the steering wheel armature.

### Brief Description of the Drawings

Further features of the present invention will become apparent to those skilled in the art to which the present invention relates from reading the following description of the invention with reference to the accompanying drawings, in which:
Fig. 1 is schematic view of a steering wheel in accordance with the present invention;
Fig. 2 is a schematic view of an injection molding apparatus in accordance with the present invention;
Fig. 3 is an enlarged schematic sectional view of the mold of Fig. 2; and
Fig. 4 is a partial sectional view taken along lines 4-4 of Fig. 1.

### Description of the Preferred Embodiment

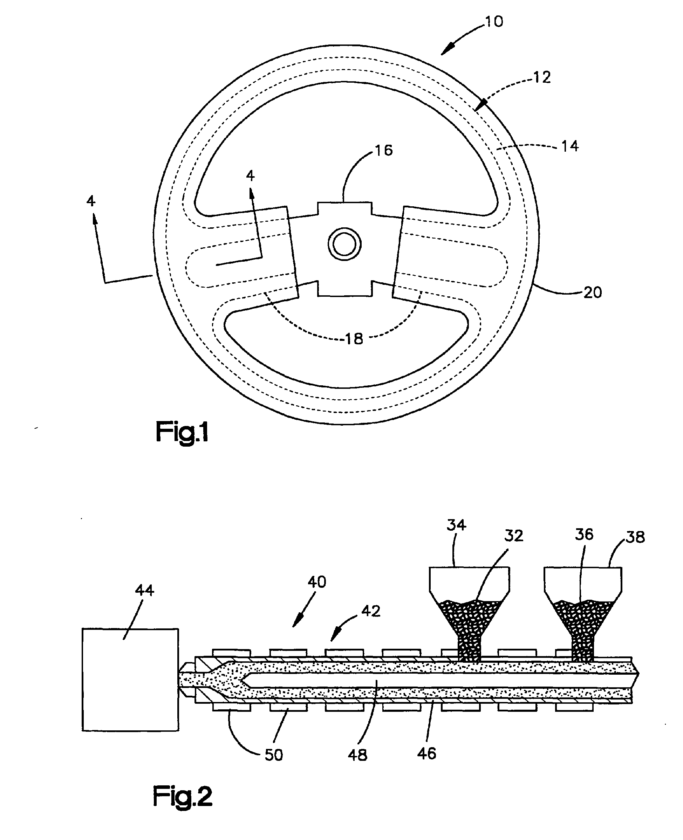

Referring to Fig. 1, a steering wheel 10 for steering a motor vehicle includes a steering wheel armature 12.
The steering wheel armature 12 comprises a rim portion 14, a hub portion 16, and spoke portions 18. The rim portion 12 is annular in configuration and encircles the hub portion 16. The spoke portions 18 connect the rim portion 12 to the hub portion 16. The hub portion 16 connects the steering wheel armature 12 to a steering column (not shown) of the motor vehicle.

The rim portion 14, the spoke portions 18, and the hub portion 16 are typically made of a metal such as steel, magnesium, or aluminum. The structure, appearance, and dimensions of the steering wheel armature 12 can be varied without deviating from the scope of the present invention.

A foamed padding material 20 is adhered to the rim portion 14 and spoke portions 18 of the steering wheel armature 12. The foamed padding material 20 covers substantially the entire surface of the rim portion 14 and spoke portions 18 of the steering wheel armature 12.

The foamed padding material 20 is formed from a thermoplastic polyolefin elastomer that is foamed with a foaming agent. The thermoplastic polyolefin elastomer of the present invention is a thermoplastic polyolefin elastomer that has a durometer shore A hardness between about 30 and about 90. If the durometer shore A hardness of the thermoplastic polyolefin elastomer is less than about 30, the foamed padding material 20 adhered to the steering wheel armature 12 will be so soft that the steering wheel will be difficult to turn. If the durometer shore A hardness of the thermoplastic polyolefin elastomer is greater than about 90, the foamed padding material 20 adhered to the steering wheel armature 12 has a hard feeling.

The thermoplastic polyolefin elastomer of the present invention includes at least one thermoplastic polyolefin polymer. Examples of thermoplastic polyolefin polymers that can be used in the thermoplastic polyolefin elastomer include polyethylene, polypropylene, polybutylene, polyisobutylene, polyoctene, thermoplastic copolymers of polyethylene, polypropylene, and polybutylene, such as ethylene-propylene copolymer (EPM), ethylene-propylene-diene terpolymers (EPDM), ethylene-butylene copolymers, and propylene-butylene copolymers, and mixtures of two or more of these polymers and copolymers.

The thermoplastic polyolefin polymer can be an elastomer or a non-elastomer. If the thermoplastic polyolefin polymer is used as the sole material in the thermoplastic polyolefin elastomer, the thermoplastic polyolefin polymer is an elastomer. The thermoplastic polyolefin polymer can be modified by cross-linking or vulcanization to form a rubber. Alternatively, the thermoplastic polyolefin polymer can be mixed with another thermoplastic material, thermoplastic elastomer, or rubber. Examples of other thermoplastic materials, thermoplastic elastomers, and rubbers that can be mixed with the thermoplastic polyolefin polymer include diblock and triblock polymers of styrene, such as styrene-ethylene-butylene-styrene (SEBS), styrene-butadiene-styrene (SBS), and blends of styrene-ethylene-butylene-styrene (SEBS) and styrene-butadiene-styrene (SBS), polystyrene, natural rubber, ethylene propylene rubber, and butyl rubber.

A preferred thermoplastic polyolefin elastomer that is used to form the foamed padding material of the present invention is commercially available from Multibase, Co., of Copley, OH under the tradename MULTIFLEX. The exact details of the chemical composition of MULTIFLEX are not known. It is known, however, that MULTIFLEX comprises a mixture of thermoplastic polyolefin elastomers based on ethylene-propylene copolymer, ethylene-propyle-diene terpolymer, and polypropylene. MULTIFLEX has a low temperature toughness, a durometer shore A hardness between about 30 and about 60, chemical resistance, ozone and UV resistance, a service temperature range between about -55°C and 120°C, tear resistance, and good paintability.

Another preferred thermoplastic polyolefin elastomer is commercially available from Dupont Dow Elastomers, L.L.C. of Wilmington, Delaware, under the tradename ENGAGE. The exact details of the chemical composition of ENGAGE are not known. It is known, however, that ENGAGE is a thermoplastic polyolefin elastomer. Table 1 provides typical properties of ENGAGE polyolefin elastomers from published Dupont Dow Elastomers, L.L.C. sales literature.

| **Table 1** | |
|---|---|
| Typical properties | Range of Values |
| Density, g/cc, ASTM D-792 | 0.857-0.913 |
| Flexural Modulus, 2% Secant, MPa, ASTM D-790 | 3-190 |
| Tensile Strength, MR, ASTM D-68 | 4-35 |
| 100% Modulus, MPa, ASTM D-412 | 1->5 |
| Elongation, %, ASTM D-638 | 700+ |
| Melting Point, °C | 33-107 |
| Hardness, Shore A, ASTM D-2240 | 50-95 |
| Haze, %m ASTM D-1003 (0.070: injection molded plaque) | <10-20 |
| Melt Index, I2 ASTM D-1238, dg/min | 0.5-30 |
| Low Temperature Brittleness, °C, ASTM D-746 | Below -76 |

Yet another preferred thermoplastic polyolefin elastomer is a rubber modified polypropylene. The rubber modified polypropylene includes polypropylene and a rubber selected from the group consisting of styrene-ethylene-butylene-styrene (SEBS), styrene-butadiene-styrene (SBS), and blends of styrene-ethylene-butylene-styrene (SEBS) and styrene-butadiene-styrene (SBS).

The foaming agent used to foam the thermoplastic polyolefin elastomer includes a chemical foaming agent. A chemical foaming agent is a foaming agent that upon exposure to an elevated temperature undergoes a chemical reaction and produces a gas. The chemical foaming agent preferably produces a gas at a temperature higher than the melting temperature of the thermoplastic polyolefin elastomer.

The chemical foaming agent can be an endothermic chemical foaming agent, an exothermic chemical foaming agent, or a mixture of an endothermic chemical foaming agent and an exothermic chemical foaming agent. By "endothermic chemical foaming agent", it is meant a chemical foaming agent that reacts endothermically to produce a gas. By "exothermic chemical foaming agent", it is meant a chemical foaming agent that reacts exothermically to produce a gas.

The endothermic chemical foaming agent preferably comprises a carbonate and an organic acid that reacts chemically with the carbonate to form carbon dioxide. The carbonate of the endothermic chemical foaming agent can be a natural carbonate, such as calcium carbonate, sodium bicarbonate, and lithium carbonate. Alternatively, the carbonate of the endothermic chemical foaming agent can be a synthetic carbonate, such as a hydrotalcite compound. An example of a hydrotalcite compound is DHT-4A, which is made by Kyowa Chemical Industry Co., Ltd., of Kagawa, Japan. Examples of other synthetic carbonates that can be used as the carbonate in the endothermic chemical foaming agent are dihydroxyaluminum sodium carbonates, dihydroxyaluminum calcium carbonates and the Halogard products made by Chattem Chemicals of Chattanooga, Tenn.

The organic acid of the endothermic chemical foaming agent of the present invention is preferably either malic or citric acid. Both acids are solids at room temperature and will react readily with a carbonate to form carbon dioxide and water. Any other organic acid that will react with the carbonate to form carbon dioxide and water may be used, such as maleic acid, formic acid, glutaric acid, oxalic, succinic acid, fumaric acid, and pyruvic acid.

Exothermic chemical foaming agents that can be used in the present invention include azo compounds, such as azodicarbonamide and modifications or derivatives thereof that on decomposition yield nitrogen, carbon monoxide, and carbon dioxide, other compounds that yield nitrogen, such as p,p-oxybis benzene sulfonyl hydrazide, other hydrazides, or p-toluene sulfonyl semicarbazide, dihydroxydiazione, 5-phenyltriazole, and compounds that yield hydrogen gas, such as sodium borohydride or other hydrides.

While the chemical foaming agent can be formulated to include either one hundred percent of an endothermic chemical foaming agent or one hundred percent of an exothermic chemical foaming agent, the preferred chemical foaming agent includes a blend of an exothermic chemical foaming agent and an endothermic chemical foaming agent. A blend is preferred even though the exothermic chemical foaming agent is more efficient and provides greater expansion than does an equal quantity of the endothermic chemical foaming agent because excessive quantities of exothermic chemical foaming agent prolong the duration of the foaming process and make the foaming process difficult to control.

The amount of chemical foaming agent used to form the foamed padding material is preferably about 0.1% to about 10% by weight of the thermoplastic polyolefin elastomer. More preferably, the amount of chemical foaming agent used to form the foamed padding material is about 0.1% to about 4% by weight of the thermoplastic polyolefin elastomer.

The chemical foaming agent of the present invention is preferably compounded and encapsulated in a resin carrier so that the encapsulated chemical foaming agent may be blended uniformly with the thermoplastic polyolefin elastomer and passed through a barrel of an injection molding machine for production of a consistent foamed padding material. The resin carrier employed to encapsulate the chemical foaming agent is preferably a high-temperature thermoplastic material or a high-temperature thermoplastic elastomer. Preferably, the resin carrier is essentially the same material as the thermoplastic polyolefin elastomer that is to be foamed. For example, if a polypropylene elastomer is selected as the thermoplastic polyolefin elastomer that will be foamed with the encapsulated chemical foaming agents, then a polypropylene elastomer is used as the resin carrier.

A preferred encapsulated chemical foaming agent used in the present invention is a mixture of CEL-SPAN 225 and CEL-SPAN 840. CEL-SPAN 225 is an exothermic chemical foaming agent commercially available from Phoenix Plastics Co., Inc. of Conroe, TX. CEL-SPAN 840 is an endothermic chemical foaming agent commercially available from Phoenix Plastics Co., Inc. of Conroe, TX. Both CEL-SPAN 225 and CEL-SPAN 840 are available in the form of granules that are encapsulated with a resin carrier. The weight percentage of CEL-SPAN 225 combined with the thermoplastic polyolefin elastomer is about 0.2% to about 0.5% by weight of the thermoplastic polyolefin elastomer. The weight percentage of CEL-SPAN 840 combined with the thermoplastic polyolefin elastomer is about 0.1% to about 0.4% by weight of the thermoplastic polyolefin elastomer.

The resin carrier used to encapsulate the particles of CEL-SPAN 840 and CEL-SPAN 225 is a high-temperature thermoplastic material or a high-temperature thermoplastic elastomer. Preferably, the resin carrier used to encapsulate the particles of CEL-SPAN 840 and CEL-SPAN 225 is the same material as the thermoplastic polyolefin elastomer.

In addition to the chemical foaming agent, the foaming agent of the present invention can include other foaming agents, such as expandable microspheres. An expandable microsphere comprises a hollow sphere of a thermoplastic material that contains a liquefied hydrocarbon. The liquefied hydrocarbon, when heated, gasifies and expands the expandable microsphere. A preferred expandable microsphere comprises a hollow sphere of a copolymer based on polyacrilonitrile. The hollow sphere has an unexpanded diameter of about 30 to about 40 microns and contains liquefied isoprene or isopentane. When heated, the isoprene or isopentane gasifies and expands the microsphere to a diameter of about 120 microns to about 140 microns. Microspheres of this type are commercially available from Akzo-Nobel Chemicals of Amersfoort, Netherlands.

The weight percentage of microspheres combined with the thermoplastic polyolefin elastomer and chemical foaming agent is 0 to about 10% by weight, based on the combined weight of the thermoplastic polyolefin elastomer and the chemical foaming agent. More preferably, the weight percentage of microspheres combined with the thermoplastic polyolefin elastomer and the chemical foaming agent is 0 to about 4% by weight of the thermoplastic polyolefin elastomer and the chemical foaming agent.

Optionally, the foamed padding material 20 of the present invention can include known additives for forming foamed thermoplastic materials. Examples of these known additives include colorants, inorganic fillers, such as carbon black and titanium oxide, nucleating agents, such as calcium carbonate and magnesium carbonate, and stabilizers, such as light stabilizers, UV absorbents, and flame retardants. These additives are employed in an amount conventionally used in the art.

Preferably, a plasticizer is not used to form the foamed padding material 20 of the present invention. Plasticizers, if used, can potentially bleed from the foamed padding material during the service life of the steering wheel. The bled plasticizer can evaporate and leave undesirable deposits on the windshield that must be removed.

The foamed padding material 20 is preferably formed and adhered to the steering wheel armature 12 in an injection molding process as illustrated schematically in Fig. 2. Referring to Fig. 2, granules 32 of the thermoplastic polyolefin elastomer are fed into a first hopper 34, and granules 36 of the chemical foaming agent are fed into a second hopper 38. Other ingredients, if utilized, can be fed into a third hopper (not shown) or fed into either the first hopper or the second hopper.
The granules 32 of thermoplastic polyolefin elastomer fed into the first hopper 34, the granules 36 of chemical foaming agent fed into the second hopper 38, and the other ingredients, if utilized, are transferred to an injection molding apparatus 40. Alternatively, the granules of thermoplastic polyolefin elastomer, the granules of chemical foaming agent, and the other ingredients, if utilized, can be mixed together and fed into the first hopper, and then transferred to the injection molding apparatus 40.

The injection molding apparatus 40 includes an injection molding machine 42 and a mold 44. In a preferred embodiment of the present invention, the injection molding machine 42 is a heated, screw-fed injection molding machine. Alternatively, the injection molding machine can be a ram-fed injection molding machine or any other injection molding machine known in the art.

The heated, screw-fed injection molding machine includes an injection barrel 46 and a screw 48 that extends through the barrel 46. The screw 48 can comprise a single screw or multiple screws (not shown). The injection molding machine 42 also includes heaters 50 that heat the injection barrel 46 along the length of the barrel 46.

The granules 32 and 36 of thermoplastic polyolefin elastomer, chemical foaming agent, and other ingredients, if utilized, are mixed and heated within the barrel 46 of the injection molding machine 42 by the heaters 50 to a temperature effective to cause the thermoplastic polyolefin elastomer to melt. Heating of the mixture also causes the chemical foaming agent to begin to gasify (i.e., react and produce a gas).

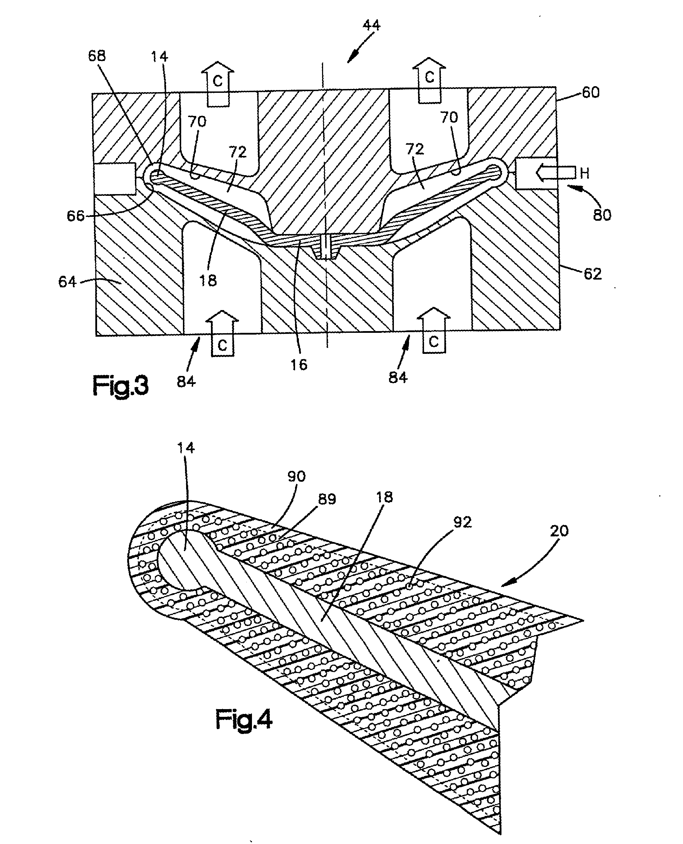

The heated mixture is then injected from the injection molding machine 42 into the mold 44. Referring to Fig. 3, which is a cross-sectional view of the mold 44, the mold 44 includes a first half 60 and a second half 62. The first half 60 and the second half 62 of the mold 44 together form a mold wall 64. The mold wall 64 includes a first wall portion 66 that defines an annular rim cavity 68 in which the rim portion 14 of the steering wheel armature 12 is received. The mold wall 64 also includes a second wall portion 70 that defines spoke cavities 72 in which the spoke portions 18 of the steering wheel armature 12 are received. The mold 44 further includes at least one sprue (i.e., gate) (not shown) that extends through the mold wall 64 for admitting the heated mixture from the injection molding machine 42 into the rim cavity 68 and the spoke cavities 72.

The heated mixture of melted thermoplastic polyolefin elastomer, chemical foaming agent, and other ingredients, if utilized, passes through the gate of the mold 44 and into rim cavity 68 and spoke cavities 72. The flow of the heated mixture continues until the rim cavity 68 and spoke cavities 72 are substantially filled and the heated mixture surrounds the rim portion 14 and spoke portions 18 of the steering wheel armature 12. The injection speed of the injection molding machine 42 is preferably controlled so that the rim cavity 68 and spoke cavities 72 are filled with the heated mixture in a period less than about 6 seconds. Preferably, the injection speed of the injection molding machine 42 is controlled so that the rim cavity 68 and spoke cavities 72 are filled in a period less than about 4.5 seconds. Surprisingly, it was found that by filling the rim cavity 68 and the spoke cavities 72 in a shorter period (i.e., less than about 6 seconds, and preferably, less than about 4.5 seconds), sink marks and knit lines were eliminated in the foamed padding material formed by the process of the present invention.

At the point of injection, the mixture of thermoplastic polyolefin elastomer, chemical foaming agent, and other ingredients, if utilized, is at an elevated temperature (i.e., a temperature above the melting temperature of the thermoplastic polyolefin elastomer). The elevated temperature of the mixture causes the chemical foaming agent to react readily and produce a gas that expands the thermoplastic polyolefin elastomer and forms individual cells within the thermoplastic polyolefin elastomer (i.e., foams the thermoplastic polyolefin elastomer).

Once the foamed thermoplastic polyolefin elastomer fills the rim cavity 68 and the spoke cavities 72, the foamed thermoplastic polyolefin elastomer cools by expansion of the gas produced by reaction of the chemical foaming agent and by transfer of heat from the thermoplastic polyolefin elastomer to the mold wall 64. Cooling of the foamed thermoplastic polyolefin elastomer causes the foamed thermoplastic polyolefin to form an inner, first portion with a stabile cellular structure. Cooling of the foamed thermoplastic polyolefin elastomer also causes the surface of the foamed thermoplastic elastomer in contact with the interior surfaces of the rim cavity 68 and spoke cavities 72 to form an outer, second portion of thermoplastic polyolefin elastomer that is free of cells, (i.e., a thin skin having a surface that is free of cells).

It was found that the areas of foamed thermoplastic polyolefin elastomer that have a lesser thickness cool to a temperature below the melting temperature of the thermoplastic polyolefin elastomer in a shorter period than the areas of foamed thermoplastic elastomer material that have a greater thickness. For example, the foamed thermoplastic polyolefin elastomer that surrounds the rim portion of the steering wheel armature and that has an average thickness of the about 0.5 inches, cools to a temperature below the melting temperature of the thermoplastic polyolefin elastomer in a shorter period than the foamed thermoplastic polyolefin elastomer that surrounds the spoke portions 18 of the steering wheel armature and that has an average thickness of about 0.75 inches to about 1.5 inches. Since the chemical foaming agent reacts and produces gas at an elevated temperature and the chemical foaming agent in the thermoplastic polyolefin elastomer surrounding the rim portion is at an elevated temperature for a shorter period, the degree of foaming of the thermoplastic polyolefin elastomer surrounding the rim portion is substantially less than the degree of foaming of the thermoplastic polyolefin elastomer surrounding the spoke portions. This difference in the degree of foaming results in a foamed padding material being formed that has outer portion with a thicker skin and an inner portion with a substantially lower cell density (i.e., the percentage of cells per cm²) around the rim portion 14 of the steering wheel armature 12 than around the spoke portions 18 of the steering wheel armature 12.

Surprisingly, it was found that degree of foaming of the thermoplastic polyolefin elastomer surrounding the rim portion of the steering wheel armature can be increased or decreased by increasing or decreasing, respectively, the temperature of first wall portion. Similarly, the degree of foaming of the thermoplastic polyolefin elastomer surrounding the spoke portions of the steering wheel armature can be increased or decreased by increasing or decreasing, respectively, the temperature of second wall portion.

In accordance with the present invention, the temperatures of the first wall portion and the second wall portion are controlled so that thermoplastic polyolefin elastomer surrounding the rim portion and spoke portions of the steering wheel armature are uniformly foamed. By "uniformly foamed", it is meant that the degree of foaming of the thermoplastic polyolefin elastomer surrounding the rim portion of the steering wheel armature is essentially equal to the degree of foaming of the thermoplastic polyolefin elastomer surrounding the spoke portions of the steering wheel armature.

Preferably, the temperature of the first wall portion 66 and the temperature of the second wall portion 70 are controlled so that the first wall portion has a temperature that is substantially below the melting temperature of the thermoplastic polyolefin elastomer, and the second wall portion has a temperature substantially below the temperature of the first wall portion.

The temperature of the second wall portion 70 can be maintained at a temperature substantially below the temperature of the first wall portion 66 by passing a cooling medium C through conduits 84 that extend adjacent to the second wall portion 70. The temperature of the cooling medium C is below the temperature of the first wall portion 66. Preferably, the temperature of the cooling medium C is below room temperature (i.e., 25°C). The cooling medium C is preferably a cooled liquid, such as cooled water or cooled ethylene glycol, but could be a cooled gas, such as cooled air or cooled nitrogen.

Alternatively, the temperature of the second wall portion 70 can be maintained at a temperature substantially below the temperature of the first wall portion 66 by passing a heating medium H through an annular conduit 80 that extends through the first wall portion 66. The temperature of the heating medium H is above the temperature of the second wall portion 70. Preferably, the temperature of the heating medium H is above room temperature (i.e., 25°C), but below the melting temperature of the thermoplastic polyolefin elastomer. The heating medium H is preferably a heated liquid, such as heated water or heated ethylene glycol, but could be a heated gas, such as heated air or heated nitrogen.

Preferably, the temperature of the first wall portion 66 is maintained at temperature below the melting temperature of the thermoplastic polyolefin elastomer and the temperature of the second wall portion 70 is maintained at a temperature below the temperature of the first wall portion by passing a heating medium H through an annular conduit 80 that extends through the first wall portion and by passing a cooling medium C through the conduits 84 that extend adjacent to the second wall portion.

Once the foamed thermoplastic material has cooled to a temperature below the melting temperature of the thermoplastic polyolefin elastomer and below the temperature at which the chemical foaming agent reacts, the mold 44 is removed from the steering wheel 10.

Referring to Fig. 4, which is a cross-sectional view of the steering wheel 10, the foamed padding material 20 so formed includes an inner, first portion 89 and an outer, second portion 90. The inner, first portion 89 has a cellular structure 92 and a substantially uniform cell density. The outer, second portion 90 has a continuous external surface free of interruption by a cell. The continuous external surface free of interruption by a cell provides the steering wheel 10 with a visible "Class A" surface and a comfortable "feel".

The average thickness of the foamed padding material 20 surrounding the rim portion 14 of the steering wheel armature 12 is about 0.5 inches. The average thickness of the foamed padding material surrounding the spoke portions 18 of the steering wheel armature 12 is about 0.75 to about 1.5 inches. The average thickness of the outer, second portion (i.e., skin) of the foamed padding material around the rim portion 14 and the spoke portions 18 of the steering wheel armature 12 is about 0.125 inches.

The foamed padding material 20 is also weatherable. By "weatherable", it is meant the foamed padding material (20) can withstand environmental conditions typically encountered during the service life of the steering wheel without additional surface treatments. If desired, the foamed padding can be painted or coated with an additional non-foamed skin, such as leather.

### Example

About 500 grams of a granular thermoplastic polyolefin elastomer was added to a first hopper. The granular thermoplastic polyolefin elastomer was commercially available from Multibase, Co., of Copley, OH under the tradename MULTIFLEX. MULTIFLEX comprises a mixture of thermoplastic polyolefin elastomers based on ethylene-propylene copolymer, ethylene-propylene-diene terpolymer, and polypropylene.

About 2.5 grams of a granular mixture of an endothermic chemical foaming agent and an exothermic chemical foaming agents were added to a second hopper. The endothermic chemical foaming agent was commercially available from the Phoenix Plastics Co., Inc. of Conroe TX, under the trade name CEL-SPAN 840. The exothermic chemical foaming agent was commercially available from Phoenix Plastics Co., Inc., of Conroe, TX, under the trade name CEL-SPAN 225. The ratio of CEL-SPAN 225 to CEL-SPAN 840 in the mixture was about 1:1. The individual grains of the CEL-SPAN 225 and CEL-SPAN 840 were encapsulated with a thermoplastic elastomer that had a melting point essentially equal to the melting point of the thermoplastic polyolefin elastomer.

The granules of thermoplastic polyolefin elastomer and the granules of chemical foaming agent were transferred to a heated screw-fed injection molding machine. The granules of thermoplastic polyolefin elastomer and granules of chemical foaming agent were mixed and heated to a temperature above the melting temperature of the thermoplastic polyolefin elastomer in the injector barrel of the injection molding machine.

The heated mixture was then injected into a mold. The mold had a first mold portion that defined a rim cavity and a second mold portion that defined a spoke cavity. A rim portion of a steering wheel armature was seated in the rim cavity and a spoke portion of the steering wheel armature was seated in the spoke cavity.

Water heated to a temperature above room temperature but below the melting temperature of the thermoplastic polyolefin elastomer was passed through an annular conduit that extended through the first wall portion. The heated water maintained the temperature of the first wall portion at a temperature below the melting temperature of the thermoplastic polyolefin elastomer, but above room temperature.

Water cooled to a temperature below room temperature and substantially below the temperature of the first wall portion was passed through conduits that extended adjacent to the second wall portion. The cooled water maintained the temperature of the second wall portion at a temperature below room temperature and substantially below the temperature of the first wall portion.

The heated mixture, after being injected into the mold, surrounded the rim portion and the spoke portions of the steering wheel armature. The injection speed at which the heated mixture was injected into the rim cavity and the spoke cavity was such that the heated mixture filled the rim cavity and the spoke cavity in about 6 seconds.

The chemical foaming agent in the heated mixture reacted exothermically and endothermically, and produced a gas. The gas caused the thermoplastic polyolefin elastomer to foam.

The foamed thermoplastic polyolefin elastomer was cooled in the mold until the temperature of the foamed polyolefin elastomer was below the melting temperature of the foamed thermoplastic polyolefin elastomer and the reaction temperature of the chemical foaming agent. The mold was then removed from the foamed padding material and the steering wheel armature.

The foamed padding material so formed included an inner, first portion and an outer, second portion. The inner, first portion had a cellular structure and a substantially uniform cell density. The outer, second portion had a continuous external surface free of interruption by a cell. The continuous external surface free of interruption by a cell provided the steering wheel with a visible "Class A" surface having a comfortable "feel".

The average thickness of the foamed padding material surrounding the rim portion of the steering wheel armature was about 0.5 inches. The average thickness of the foamed padding material surrounding the spoke portions of the steering wheel armature was about 1 inch. The average thickness of the outer, second portion (i.e., skin) of the foamed padding material surrounding the rim portion and the spoke portions of the steering wheel armature was about 0.125 inches.

From the above description of then invention, those skilled in the art will perceive improvements, changes and modifications. Such improvements, changes, and modifications within the skill of the art are intended to be covered by the appended claims.

## Claims

1. A steering wheel comprising a rim portion, a spoke portion, and a foamed padding material adhered to at least one of said rim portion and said spoke portion, said foamed padding material including a first portion and a second portion, said first portion having cellular structure and a substantially uniform cell density, and said second portion having a continuous external surface free of interruption by a cell, **characterised in that** said foamed padding material comprises a gasified chemical foaming agent and a thermoplastic polyolefin elastomer.

2. The steering wheel of claim 1, wherein the thermoplastic polyolefin elastomer is weatherable and has a durometer shore A hardness of about 30 to about 90.

3. The steering wheel of claim 1, wherein the thermoplastic polyolefin elastomer includes a thermoplastic polyolefin polymer selected from the group consisting of polyethylene, polypropylene, polybutylene, polyisobutylene, polyoctene, copolymers of polyethylene, polypropylene, and polybutylene, and mixtures thereof.

4. The steering wheel of claim 3, wherein the thermoplastic polyolefin polymer is an elastomer or non-elastomer material.

5. The steering wheel of claim 3, wherein the thermoplastic polyolefin elastomer further includes another thermoplastic elastomer or rubber.

6. The steering wheel of claim 1, wherein the thermoplastic polyolefin elastomer comprises a mixture of ethylene-propylene copolymer, ethylene-propylene-diene terpolymer, and polypropylene.

7. The steering wheel of claim 1 wherein the foamed padding material is plasticizer-free.

8. The steering wheel of claim 1, said chemical foaming agent comprises an exothermic chemical foaming agent, an endothermic chemical foaming agent, or a mixture thereof.

9. The steering wheel of claim 1, wherein the chemical foaming agent prior to being gasified is in the form of a plurality of granules that are encapsulated with a resin carrier.

10. The steering wheel of claim 9, wherein the resin carrier is essentially the same material as the thermoplastic polyolefin elastomer.

11. The steering wheel of claim 1 wherein the foamed padding material further includes an additive selected from the group consisting of colorants, inorganic fillers, nucleating agents, and stabilizers.

12. The steering wheel according to any of claims 1 to 11 wherein the foamed padding material is a plasticizer-free foamed padding material adhered to said rim portion and said spoke portion, said foamed padding material adhered to said rim portion having a first thickness and said foamed padding material adhered to said spoke portion having a second thickness different from said first thickness.

13. The steering wheel according to claim 1, wherein said foamed padding material comprises a rubber modified polypropylene.

14. The steering wheel of claim 13 wherein the rubber modified polypropylene comprises polypropylene and a rubber selected from the group consisting of styrene-ethylene-butylene-styrene (SEBS), styrene-butadiene-styrene (SBS), and blends of styrene-ethylene-butylene-styrene (SEBS) and styrene-butadiene-styrene (SBS).

15. A method of manufacturing a foamed padding material for a steering wheel, said method comprising the steps of:
mixing a thermoplastic polyolefin elastomer and a chemical foaming agent;
foaming said thermoplastic polyolefin elastomer with said chemical foaming agent;
providing a steering wheel armature having a rim portion and a spoke portion; and
adhering said foamed thermoplastic polyolefin elastomer to said rim portion and said spoke portion of said steering wheel armature, said foamed thermoplastic polyolefin elastomer adhered to said rim portion and spoke portion of said steering wheel armature forming a foamed padding material including a first portion and a second portion, said first portion having cellular structure and a substantially uniform cell density, said second portion having an external surface free of interruption by a cell.

16. The method of claim 15 wherein said foamed thermoplastic polyolefin elastomer is adhered to said rim portion and said spoke portion of said steering wheel armature by molding said foamed thermoplastic polyolefin elastomer to said rim portion and said spoke portion of said steering wheel armature.

17. The method of claim 15 wherein said thermoplastic polyolefin elastomer is foamed by heating said mixture of thermoplastic polyolefin elastomer and chemical foaming agent to a temperature above the melting temperature of said thermoplastic polyolefin elastomer.

18. The method of claim 15, wherein said thermoplastic polyolefin elastomer is weatherable and has a durometer shore A hardness of about 30 to about 90.

19. The method of claim 15, wherein the thermoplastic polyolefin elastomer comprises a mixture of ethylene-propylene copolymer, ethylene-propylene-diene terpolymer, and polypropylene.

20. The method of claim 15, wherein said chemical foaming agent comprises an exothermic chemical foaming agent, an endothermic chemical foaming agent, or a mixture thereof.

21. The method of claim 20 wherein said chemical foaming agent is in the form of a plurality of granules that are encapsulated with a resin carrier.

22. The method of claim 21, wherein the resin carrier is essentially the same material as the thermoplastic polyolefin elastomer.

23. The method of claim 16, wherein said foamed thermoplastic polyolefin elastomer is molded to said steering wheel by injection molding.

24. The method of claim 15, wherein said foamed padding material is plasticizer-free.

25. A method of manufacturing a steering wheel, said method comprising the steps of:
mixing a thermoplastic polyolefin elastomer and a chemical foaming agent;
heating the mixture of said thermoplastic polyolefin elastomer and said foaming agent to a temperature above the melting temperature of said thermoplastic polyolefin elastomer;
foaming said melted thermoplastic polyolefin elastomer with said foaming agent;
providing a mold having a first mold wall and a second mold wall, said first wall portion defining a first cavity in which a rim portion of a steering wheel armature is disposed, said second wall portion defining a second cavity in which a spoke portion said steering wheel armature is disposed;
maintaining the temperature of the first wall portion at a first temperature below the melting temperature of thermoplastic polyolefin elastomer;
maintaining the temperature of the second wall portion at a second temperature, said second temperature being substantially lower than said first temperature;
transferring said foamed thermoplastic polyolefin elastomer into said first cavity and said second cavity; and
cooling said foamed thermoplastic polyolefin elastomer to a temperature below the melting temperature of said thermoplastic polyolefin elastomer, said cooled thermoplastic polyolefin elastomer adhering to said rim portion and spoke portion of said steering wheel armature.

26. The method of claim 25, wherein said cooled foamed thermoplastic polyolefin elastomer forms a foamed padding material including a first portion and a second portion, said first portion having a cellular structure and a substantially uniform cell density, and said second portion having a continuous external surface free of interruption by a cell.

27. The method of claim 26, wherein said foamed padding material adhered to said rim portion of said steering wheel armature has a first thickness and said foamed padding material adhered to said spoke portion has a second thickness different from said first thickness.

28. The method of claim 27 wherein said second thickness is substantially greater than said first thickness.

29. The method of claim 25, wherein said thermoplastic polyolefin elastomer is weatherable and has a durometer shore A hardness of about 30 to about 90.

30. The method of claim 25, wherein the thermoplastic polyolefin elastomer comprises a mixture of ethylene-propylene copolymer, ethylene-propylene-diene terpolymer, and polypropylene.

31. The method of claim 25, wherein said foaming agent comprises an exothermic chemical foaming agent, an endothermic chemical foaming agent, or a mixture thereof.

32. The method of claim 31 wherein said foaming agent is in the form of a plurality of granules that are encapsulated with a resin carrier.

33. The method of claim 25, wherein said foamed padding material is plasticizer-free.

## Patentansprüche

1. Ein Lenkrad das Folgendes aufweist: einen Randteil, einen Speichenteil, und ein geschäumtes Polster- bzw. Schaumpolstermaterial, das an dem Randteil und/oder dem Speichenteil haftet, wobei das Schaumpolstermaterial einen ersten Teil und einen zweiten Teil umfasst, wobei der erste Teil eine zellartige Struktur und eine im Wesentlichen gleichförmige Zelldichte besitzt, und wobei der zweite Teil eine kontinuierliche Außenoberfläche besitzt, die frei von Unterbrechungen durch eine Zelle ist, **dadurch gekennzeichnet, dass** das Schaumpolstermaterial einen in Gas umgewandelten chemischen Schaumbildner und ein thermoplatisches Polyolefinelastomer aufweist.

2. Lenkrad gemäß Anspruch 1, wobei das thermoplastische Polyolefinelastomer beständig ist und eine Härtemesser bzw. Durometer Shore A Härte von ungefähr 30 bis ungefähr 90 besitzt.

3. Lenkrad gemäß Anspruch 1, wobei das thermoplastische Polyolefinelastomer ein thermoplastisches Polyolefinpolymer umfasst, das aus der Gruppe ausgewählt wird, die aus Polyethylen, Polypropylen, Polybutylen, Polyisobutylen, Polyocten, Copolymeren von Polyethylen, Polypropylen, und Polybutylen und Mischungen daraus besteht.

4. Lenkrad gemäß Anspruch 3, wobei das thermoplastische Polyolefinpolymer ein Elastomer oder nicht-elastomeres Material ist.

5. Lenkrad gemäß Anspruch 3, wobei das thermoplastische Polyolefinelastomer ferner ein weiteres thermoplastisches Elastomer oder Gummi umfasst.

6. Lenkrad gemäß Anspruch 1, wobei das thermoplastische Polyolefinelastomer eine Mischung eines Ethylen-Propylen-Copolymers, Ethylen-Propylen-Diene-Terpolymers und Polypropylens aufweist.

7. Lenkrad gemäß Anspruch 3, wobei das Schaumpolstermaterial weichmacherfrei ist.

8. Lenkrad gemäß Anspruch 1, wobei der chemische Schaumbildner einen exothermen chemischen, einen endothermen chemischen Schaumbildner, oder eine Mischung von diesen aufweist.

9. Lenkrad gemäß Anspruch 1, wobei der chemische Schaumbildner vor der Umwandlung in Gas die Form einer Vielzahl von Körnchen besitzt, die in einen Harzträger eingekapselt sind.

10. Lenkrad gemäß Anspruch 9, wobei der Harzträger im Wesentlichen das gleiche Material ist wie das thermoplastische Polyolefinelastomer.

11. Lenkrad gemäß Anspruch 1, wobei das Schaumpolstermaterial ferner einen Zusatzstoff umfasst, der aus der Gruppe ausgewählt wird, die aus Farbstoffen, anorganischen Füllstoffen, keimbildenden Mitteln, und Stabilisatoren besteht.

12. Lenkrad gemäß einem der Ansprüche 1 bis 11, wobei das Schaumpolstermaterial ein weichmacherfreies Schaumpolstermaterial ist, das an dem Randteil und dem Speichenteil haftet, wobei das Schaumpolstermaterial, das an dem Randteil haftet, eine erste Dicke besitzt, und das Schaumpolstermaterial, das an dem Speichenteil haftet, eine zweite Dicke besitzt, die sich von der ersten Dicke unterscheidet.

13. Lenkrad gemäß Anspruch 1, wobei das Schaumpolstermaterial ein kautschukmodifiziertes Polypropylen aufweist.

14. Lenkrad gemäß Anspruch 13, wobei das kautschukmodifizierte Polypropylen Polypropylen und ein Gummi aufweist, das aus der Gruppe ausgewählt wird, die aus Styren-Ethylen-Butylen-Styren (SEBS), Styren-Butadien-Styren (SBS) und Mischungen von Styren-Ethylen-Butylen-Styren (SEBS) und Styren-Butadien-Styren (SBS) bestehen.

15. Ein Verfahren zur Herstellung eines Schaumpolstermaterials für ein Lenkrad, wobei das Verfahren folgende Schritte aufweist:
Vermischen eines thermoplastischen Polyolefinelastomers und eines chemischen Schaumbildners;
Aufschäumen des thermoplastischen Polyolefinelastomers mit dem chemischen Schaumbildner;
Vorsehen eines Lenkradankers mit einem Randteil und einem Speichenteil; und
Anhaften des geschäumten thermoplastischen Polyolefinelastomers an dem Randteil und dem Speichenteil des Lenkradankers, wobei das geschäumte thermoplastische Polyolefinelastomer, das an dem Randteil und dem Speichenteil des Lenkrads anhaftet ein Schaumpolstermaterial einschließlich eines ersten Teils und eines zweiten Teils bildet, wobei der erste Teil eine zellartige Struktur und eine im Wesentlichen gleichförmige Zelldichte besitzt, und wobei der zweite Teil eine Außenoberfläche besitzt, die frei von Unterbrechungen durch eine Zelle ist.

16. Verfahren gemäß Anspruch 15, wobei das aufgeschäumte thermoplastische Polyolefinelastomer an dem Randteil und dem Speichenteil des Lenkradankers durch Formpressen bzw. Formen des geschäumten thermoplastischen Polyolefinelastomers an dem Randteil und dem Speichenteil des Lenkradankers angehaftet wird.

17. Verfahren gemäß Anspruch 15, wobei das aufgeschäumte thermoplastische Polyolefinelastomer durch Erwärmen der Mischung des thermoplastischen Polyolefinelastomers und des chemischen Schaumbildners auf einer Temperatur oberhalb des Schmelzpunkts des thermoplastischen Polyolefinelastomers aufgeschäumt wird.

18. Verfahren gemäß Anspruch 15, wobei das thermoplastische Polyolefinelastomer verwitterbar ist und eine Durometer Shore A Härte von ungefähr 30 bis ungefähr 90 besitzt.

19. Verfahren gemäß Anspruch 15, wobei das thermoplastische Polyolefinelastomer eine Mischung eines Ethylen-Propylen-Copolymers, Ethylen-Propylen-Dien-Terpolymers und Polypropylens aufweist.

20. Verfahren gemäß Anspruch 15, wobei der chemische Schaumbildner einen exothermen chemischen Schaumbildner, einen endothermen chemischen Schaumbildner, oder eine Mischung von diesen aufweist.

21. Verfahren gemäß Anspruch 20, wobei der chemische Schaumbildner die Form einer Vielzahl von Körnchen besitzt, die in einen Harzträger eingeschlossen sind.

22. Verfahren gemäß Anspruch 21, wobei der Harzträger im Wesentlichen das gleiche Material ist, wie das thermoplastische Polyolefinelastomer.

23. Verfahren gemäß Anspruch 16, wobei das aufgeschäumte Polyolefinelastomer zu dem Lenkrad durch Spritzgießen geformt wird.

24. Verfahren gemäß Anspruch 15, wobei das Schaumpolstermaterial weichmacherfrei ist.

25. Verfahren zur Herstellung eines Lenkrads, wobei das Verfahren die folgenden Schritte aufweist:
Vermischen eines thermoplastischen Polyolefinelastomers und eines chemischen Schaumbildners;
Erwärmen der Mischung des thermoplastischen Polyolefinelastomers und des Schaumbildners auf eine Temperatur oberhalb des Schmelzpunkts des thermoplastischen Polyolefinelastomers;
Aufschäumen des geschmolzenen thermoplastischen Polyolefinelastomers mit dem Schaumbildner;
Vorsehen einer Form mit einer ersten Formwand und einer zweiten Formwand, wobei die erste Formwand einen ersten Hohlraum definiert, in dem ein Randteil eines Lenkradankers angeordnet ist, wobei der zweite Wandteil einen zweiten Hohlraum definiert, indem ein Speichenteil des Lenkradankers angeordnet ist;
Aufrechterhalten der Temperatur des ersten Wandteils bei einer ersten Temperatur unterhalb der Schmelztemperatur des thermoplastischen Polyolefinelastomers;
Aufrechterhalten der Temperatur des zweiten Wandteils bei einer zweiten Temperatur, die wesentlich niedriger ist als die erste Temperatur;
Übertragen des aufgeschäumten thermoplastischen Polyolefinelastomers in den ersten Hohlraum und den zweiten Hohlraum; und
Abkühlen des aufgeschäumten thermoplastischen Polyolefinelastomers auf eine Temperatur unterhalb der Schmelztemperatur des thermoplastischen Polyolefinelastomers, wobei das abgekühlte thermoplastische Polyolefinelastomer an dem Randteil und dem Speichenteil des Lenkradankers anhaftet.

26. Verfahren gemäß Anspruch 25, wobei das abgekühlte, aufgeschäumte thermoplastische Polyolefinelastomer ein Schaumpolstermaterial bildet, das einen ersten Teil und einen zweiten Teil umfasst, wobei der erste Teil eine zellartige Struktur und eine im Wesentlichen gleichförmige Zelldichte besitzt, und wobei der zweite Teil eine kontinuierliche Außenoberfläche besitzt, die frei von Unterbrechungen durch eine Zelle ist.

27. Verfahren gemäß Anspruch 26, wobei das Schaumpolstermaterial, das an dem Randteil des Lenkradankers anhaftet eine erste Dicke besitzt und das Schaumpolstermaterial, das an dem Speichenteil anhaftet, eine zweite Dicke besitzt, die sich von der ersten Dicke unterscheidet.

28. Verfahren gemäß Anspruch 27, wobei die zweite Dicke wesentlich größer als die erste Dicke ist.

29. Verfahren gemäß Anspruch 25, wobei das thermoplastische Polyolefinelastomer verwitterbar ist und eine Durometer Shore A Härte von ungefähr 30 bis ungefähr 90 besitzt.

30. Verfahren gemäß Anspruch 25, wobei das thermoplastische Polyolefinelastomer eine Mischung eines Ethylen-Propylen-Copolymers, Ethylen-Propylen-Dien-Terpolymers und Polypropylens aufweist.

31. Verfahren gemäß Anspruch 25, wobei der Schaumbildner einen exothermen chemischen Schaumbildner, einen endothermen chemischen Schaumbildner, oder eine Mischung von diesen aufweist.

32. Verfahren gemäß Anspruch 31, wobei der Schaumbildner die Form einer Vielzahl von Körnchen besitzt, die in einen Harzträger eingeschlossen sind.

33. Verfahren gemäß Anspruch 25, wobei das Schaumpolstermaterial weichermacherfrei ist.

## Revendications

1. Volant de direction comprenant une partie d'anneau, une partie de rayon, et un matériau de rembourrage sous forme de mousse collé à au moins l'une de ladite partie d'anneau et de ladite partie de rayon, ledit matériau de rembourrage sous forme de mousse incluant une première partie et une seconde partie, ladite première partie ayant une structure cellulaire et une densité cellulaire sensiblement uniforme, et ladite seconde partie comportant une surface extérieure continue dépourvue d'interruption par une cellule, **caractérisé en ce que** ledit matériau de rembourrage sous forme de mousse comprend un agent moussant chimique gazéifié et un élastomère polyoléfinique thermoplastique.

2. Volant de direction selon la revendication 1, dans lequel l'élastomère polyoléfinique thermoplastique peut être exposé aux intempéries et a une dureté Shore A d'environ 30 à environ 90.

3. Volant de direction selon la revendication 1, dans lequel l'élastomère polyoléfinique thermoplastique inclut un polymère polyoléfinique thermoplastique choisi à partir du groupe constitué d'un polyéthylène, d'un polypropylène, d'un polybutylène, d'un polyisobutylène, d'un polyoctène, de copolymères de polyéthylène, de polypropylène et de polybutylène, et de mélanges de ceux-ci.

4. Volant de direction selon la revendication 3, dans lequel le polymère polyoléfinique thermoplastique est un matériau élastomère ou non élastomère.

5. Volant de direction selon la revendication 3, dans lequel l'élastomère polyoléfinique thermoplastique inclut en outre un autre élastomère thermoplastique ou du caoutchouc.

6. Volant de direction selon la revendication 1, dans lequel l'élastomère polyoléfinique thermoplastique comprend un mélange de copolymère d'éthylène-propylène, de terpolymère d'éthylène-propylène-diène, et de polypropylène.

7. Volant de direction selon la revendication 1, dans lequel le matériau de rembourrage sous forme de mousse est dépourvu de plastifiant.

8. Volant de direction selon la revendication 1, dans lequel ledit agent moussant chimique comprend un agent moussant chimique exothermique, un agent moussant chimique endothermique, ou un mélange de ceux-ci.

9. Volant de direction selon la revendication 1, dans lequel l'agent moussant chimique a la forme d'une pluralité de granulés qui sont confinés dans un porteur à base de résine avant d'être gazéifiés.

10. Volant de direction selon la revendication 9, dans lequel le porteur à base de résine est essentiellement constitué du même matériau que l'élastomère polyoléfinique thermoplastique.

11. Volant de direction selon la revendication 1, dans lequel le matériau de rembourrage sous forme de mousse inclut en outre un additif choisi à partir du groupe constitué de colorants, de charges inorganiques, d'agents de nucléation, et de stabilisants.

12. Volant de direction selon l'une quelconque des revendications 1 à 11, dans lequel le matériau de rembourrage sous forme de mousse est un matériau de rembourrage sous forme de mousse dépourvu de plastifiant collé à ladite partie d'anneau et à ladite partie de rayon, ledit matériau de rembourrage sous forme de mousse collé à ladite partie d'anneau ayant une première épaisseur et ledit matériau de rembourrage sous forme de mousse collé à ladite partie de rayon ayant une seconde épaisseur différente de ladite première épaisseur.

13. Volant de direction selon la revendication 1, dans lequel ledit matériau de rembourrage sous forme de mousse comprend un polypropylène modifié au caoutchouc.

14. Volant de direction selon la revendication 13, dans lequel le polypropylène modifié au caoutchouc comprend un polypropylène et un caoutchouc choisis à partir du groupe constitué de styrène-éthylène-butylène-styrène (SEBS), de styrène-butadiène-styrène (SBS), et de mélanges de styrène-éthylène-butylène-styrène (SEBS) et de styrène-butadiène-styrène (SBS).

15. Procédé de fabrication d'un matériau de rembourrage sous forme de mousse pour un volant de direction, ledit procédé comprenant les étapes, dans lesquelles :
on mélange un élastomère polyoléfinique thermoplastique et un agent moussant chimique ;
on fait mousser ledit élastomère polyoléfinique thermoplastique à l'aide dudit agent moussant chimique;
on réalise une armature de volant de direction comportant une partie d'anneau et une partie de rayon ; et
on colle ledit élastomère polyoléfinique thermoplastique à ladite partie d'anneau et à ladite partie de rayon de ladite armature de volant de direction, ledit élastomère polyoléfinique thermoplastique sous forme de mousse collé à ladite partie d'anneau et ladite partie de rayon de ladite armature de volant de direction formant un matériau de rembourrage sous forme de mousse incluant une première partie et une seconde partie, ladite première partie ayant une structure cellulaire et une densité cellulaire sensiblement uniforme, ladite seconde partie comportant une surface extérieure dépourvue d'interruption par une cellule.

16. Procédé selon la revendication 15, dans lequel on colle ledit élastomère polyoléfinique thermoplastique sous forme de mousse à ladite partie d'anneau et à ladite partie de rayon de ladite armature de volant de direction, en moulant ledit élastomère polyoléfinique thermoplastique sous forme de mousse sur ladite partie d'anneau et sur ladite partie de rayon de ladite armature de volant de direction.

17. Procédé selon la revendication 15, dans lequel on fait mousser ledit élastomère polyoléfinique thermoplastique en chauffant ledit mélange d'élastomère polyoléfinique thermoplastique et d'agent moussant chimique à une température supérieure à la température de fusion dudit élastomère polyoléfinique thermoplastique.

18. Procédé selon la revendication 15, dans lequel ledit élastomère polyoléfinique thermoplastique peut être exposé aux intempéries et a une dureté Shore A d'environ 30 à environ 90.

19. Procédé selon la revendication 15, dans lequel l'élastomère polyoléfinique thermoplastique comprend un mélange de copolymère d'éthylène-propylène, de terpolymère d'éthylène-propylène-diène, et de polypropylène.

20. Procédé selon la revendication 15, dans lequel ledit agent moussant chimique comprend un agent moussant chimique exothermique, un agent moussant chimique endothermique, ou un mélange de ceux-ci.

21. Procédé selon la revendication 20, dans lequel ledit agent moussant chimique a la forme d'une pluralité de granulés qui sont confinés dans un porteur à base de résine.

22. Procédé selon la revendication 21, dans lequel le porteur à base de résine est essentiellement constitué du même matériau que l'élastomère polyoléfinique thermoplastique.

23. Procédé selon la revendication 16, dans lequel l'élastomère polyoléfinique thermoplastique sous forme de mousse est moulé sur ledit volant de direction par moulage par injection.

24. Procédé selon la revendication 15, dans lequel ledit matériau de rembourrage sous forme de mousse est dépourvu de plastifiant.

25. Procédé de fabrication d'un volant de direction, ledit procédé comprenant les étapes, dans lesquelles :
on mélange un élastomère polyoléfinique thermoplastique et un agent moussant chimique ;
on chauffe le mélange dudit élastomère polyoléfinique thermoplastique et dudit agent moussant à une température supérieure à la température de fusion dudit élastomère polyoléfinique thermoplastique ;
on fait mousser ledit élastomère polyoléfinique thermoplastique fondu à l'aide dudit agent moussant ;
on réalise un moule comportant une première paroi de moule et une seconde paroi de moule, ladite première partie de paroi définissant une première cavité dans laquelle on dispose une partie d'anneau d'une armature de volant de direction, ladite seconde partie de paroi définissant une seconde cavité dans laquelle on dispose une partie de rayon de ladite armature de volant de direction ;
on maintient la température de la première partie de paroi à une première température inférieure à la température de fusion de l'élastomère polyoléfinique thermoplastique ;
on maintient la température de la seconde partie de paroi à une seconde température, ladite seconde température étant sensiblement inférieure à ladite première température ;
on transfère ledit élastomère polyoléfinique thermoplastique sous forme de mousse dans ladite première cavité et dans ladite seconde cavité ; et
on refroidit ledit élastomère polyoléfinique thermoplastique sous forme de mousse à une température inférieure à la température de fusion dudit élastomère polyoléfinique thermoplastique, ledit élastomère polyoléfinique thermoplastique refroidi collant à ladite partie d'anneau et à ladite partie de rayon de ladite armature de volant de direction.

26. Procédé selon la revendication 25, dans lequel ledit élastomère polyoléfinique thermoplastique sous forme de mousse refroidi forme un matériau de rembourrage sous forme de mousse incluant une première partie et une seconde partie, ladite première partie ayant une structure cellulaire et une densité cellulaire sensiblement uniforme, et ladite seconde partie comportant une surface extérieure continue dépourvue d'interruption par une cellule.

27. Procédé selon la revendication 26, dans lequel ledit matériau de rembourrage sous forme de mousse collé à ladite partie d'anneau de ladite armature de volant de direction a une première épaisseur et ledit matériau de rembourrage sous forme de mousse collé à ladite partie de rayon a une seconde épaisseur différente de ladite première épaisseur.

28. Procédé selon la revendication 27, dans lequel ladite seconde épaisseur est sensiblement supérieure à ladite première épaisseur.

29. Procédé selon 1a revendication 25, dans lequel ledit élastomère polyoléfinique thermoplastique peut être exposé aux intempéries et a une dureté Shore A d'environ 30 à environ 90.

30. Procédé selon la revendication 25, dans lequel l'élastomère polyoléfinique thermoplastique comprend un mélange de copolymère d'éthylène-propylène, de terpolymère d'éthylène-propylène-diène, et de polypropylène.

31. Procédé selon la revendication 25, dans lequel ledit agent moussant comprend un agent moussant chimique exothermique, un agent moussant chimique endothermique, ou un mélange de ceux-ci.

32. Procédé selon la revendication 31, dans lequel ledit agent moussant a la forme d'une pluralité de granulés qui sont confinés dans un porteur à base de résine.

33. Procédé selon la revendication 25, dans lequel ledit matériau de rembourrage sous forme de mousse est dépourvu de plastifiant.
